# EUROPEAN PATENT APPLICATION

(11) **EP 2 985 725 A1**
(43) Date of publication of application: **17.02.2016**
(21) Application number: 15156078.6
(22) Date of filing: 23.02.2015
(51) Int. Cl.: G06Q 30/02, G09F 3/20

(54) **Electronic information label system with improved information update function**

(30) Priority: 13.08.2014 KR 20140105364
(71) Applicant: Samsung Electro-Mechanics Co., Ltd., Gyeonggi-do (KR)
(72) Inventor: Lee, Tae Ha, Gyeonggi-do (KR); Hwang, Ki Han, Gyeonggi-do (KR); Yoon, Dong Sik, Gyeonggi-do (KR); Kim, Eun Sun, Gyeonggi-do (KR)
(74) Representative: Grünecker Patent- und Rechtsanwälte PartG mbB

(57) **Abstract**

There is provided a technology about a relay station and an electronic label. According to an exemplary embodiment, the relay station includes: a change information receiver configured to receive, from a server, product information changing time, electronic label identification numbers, and product information change content; a change list generator configured to define a wake-up time for each electronic label identification number and generate a change list of target electronic labels; a change information transmitter configured to transmit change information including the wake-up time and the product information change content to electronic labels corresponding to the identification numbers included in the change list; and a change command transmitter configured to transmit change command information to the electronic labels, which correspond to the identification numbers included in the change list, through a wake-up channel so as to request a change in product information.

## Description

### CROSS-REFERENCE TO RELATED APPLICATION(S)

This application claims priority from Korean Patent Application No. 10-2014-0105364, filed on August 13, 2014, in the Korean Intellectual Property Office, the entire disclosure of which is incorporated herein by reference for all purposes.

### BACKGROUND

### 1. Field

The following description relates to a technology about a relay station and an electronic label that displays information on products on store shelves.

### 2. Description of the Related Art

Electric Information Label (EIL, hereinafter referred to as 'electronic label') is an electronic device that replaces a paper label that displays information (for example, name, price, and origin) of products on store shelves. The EIL communicates with a server through a relay station. EILs managed by the same relay station may form a group, and the whole EILs are separated into these groups, and information is managed according to the separated groups. To reduce power consumption of an electronic label, which is battery-powered, the electronic label maintains in a sleep mode except for a wake-up period required for information update. In addition, an Electronic Paper Display (EPD) capable of displaying information without power supply is used as a display. During a wake-up period, an electronic label listens to communication from a server and, if there is data to be received from the server, receives, stores, and display the data. The data includes product information, and the product information includes identification information and price information of a product.

If price of a specific product is changed, the server transmits price information to be changed to electronic labels displaying information on the product through a relay station and then the electronic labels displays the updated price information. However, the whole process requires a relatively long time to display the information on the same product, and thus, it may cause users to feel confused. In addition, the price may be changed between when a user selects the specific product and when the user pays for the selected product.

### SUMMARY

The following description relates to a relay station and electronic labels that change information displayed thereon at the same time. It aims to cause electronic labels to change displayed product information of the same product at the same time. It also aims to select an electronic label, whose product information is to be changed, so as to change the product information.

In one general aspect, a relay station transmits product change information to a plurality of electronic labels in advance. At a time for changing product information, the electronic labels wake up in response to a set event and receive a broadcasted wake-up message to check whether change information is updated or not and change display information simultaneously.

In another general aspect, an identical wake-up time may be set in a change list of the relay station, and electronic labels which have received the change list may change product information at the same time.

In yet another general aspect, different wake-up times may be set in a change list of the relay station, and electronic labels which have received the change list may wake up at different times to change product information.

In yet another general aspect, a plurality of wake-up times may be set in a change list of the relay station, and each of electronic labels which have received the change list may wake up at a plurality of wake-up times to change product information.

In yet another general aspect, an electronic label may set a timer to a wake-up time included in change information, and wake up in response to a timer event to check whether to display change in the change information.

Other features and aspects may be apparent from the following detailed description, the drawings, and the claims.

### BRIEF DESCRIPTION OF THE DRAWINGS

FIG. 1 is a diagram illustrating an electronic label system according to an exemplary embodiment.
FIG. 2 is a block diagram illustrating a relay station according to an exemplary embodiment.
FIG. 3 is a block diagram illustrating an electronic label according to an exemplary embodiment.
FIG. 4 is a flowchart illustrating an information changing method of an electronic label according to an exemplary embodiment.
FIG. 5 is a flow chart illustrating an information changing method of an electronic label according to another exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

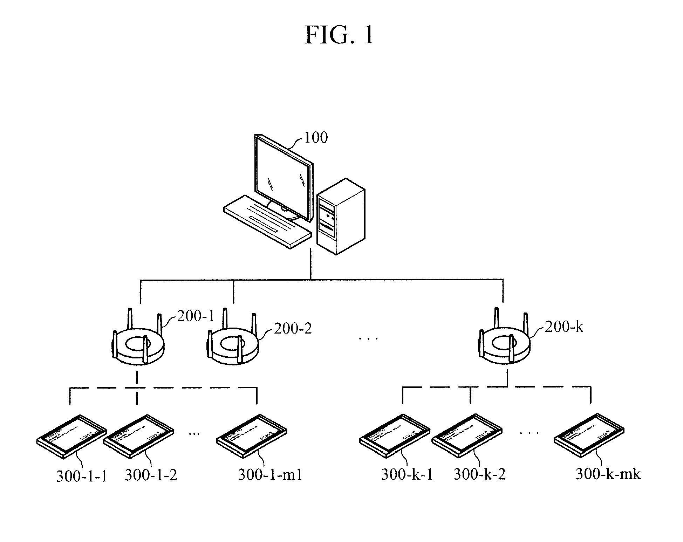

FIG. 1 is a diagram illustrating an electronic label system according to an exemplary embodiment.

Referring to FIG. 1, an electronic label system includes a server 100, a replay station 200 that relays information, and an electronic label 300.

The server 100 communicates with a plurality of groups of electronic labels 300-1-1, 300-1-2, ..., 300-1-ml, ..., 300-k-1, 300-k-2, ..., 300-k-mk through relays 200-1, 200-2, ..., and 200-k. The server 100 is wiredly connected to the relay stations 200-1, 200-2, ..., and 200-k, and each of the relay stations 200-1, 200-2, ..., and 200-k communicates with electronic labels of a group belonging thereto in accordance with a short-range wireless protocol, that is, a protocol which is defined above the PHY/MAC layer in the IEEE802.14.4 standard.

The server 100 provides stores and distributes data for information management. Specifically, the server 100 stores and transmits product information of products displayed on store shelve, for example, price of products. In addition, the server 100 may also transmit information about time for changing price of a product, that is, discount time information of a product. In this case, the server 100 may include: a product information data base configured to store product information necessary for management of a system and management information of the system, and a middle ware configured to connect or relay the data base to an external device.

The relay station 200 relays information between the electronic label 300 and the server 100. The relay station 200 may be connected to the server 100 over a wired network, such as Ethernet, and connected to the electronic label 300 over a wireless network, such as WiFi and Zigbee. For example, the relay station 200 may be a WiFi Access Point (AP) or a Zigbee gateway.

The electronic label 300 receives product information from the server 100 through the relay station 200 and displays the received product information. For example, the electronic label 300 and the relay station 200 may be connected to each other over a wireless network, such as WiFi, Bluetooth, or Zigbee. However, the electronic label 200 and the relay station 200 may be connected over a wired network, if necessary.

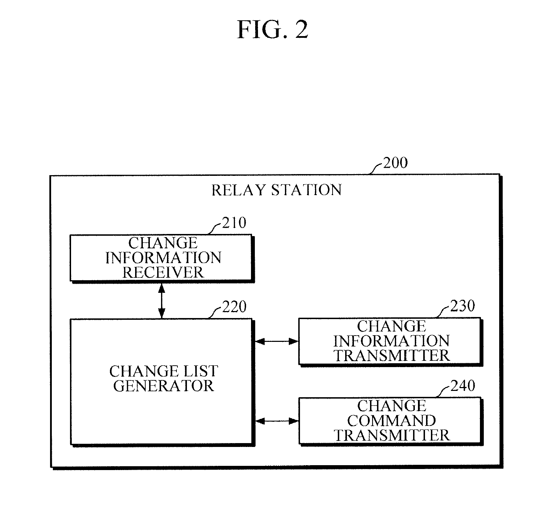

FIG. 2 is a block diagram illustrating a relay station according to an exemplary embodiment.

Referring to FIG. 2, a relay station 200 includes a change information receiver 210, a change list generator 220, a change information transmitter 230, and a change command transmitter 240. In addition, the configuration of the relay station 200 shown in FIG. 2 is merely exemplary, and the relay station 200 may include some of the modules shown in FIG. 2 or may further include other necessary modules for operation. For example, in order to communicate with the management server 100, the relay station 200 may further include a communicator having a communication function.

The term 'product information' used throughout the present disclosure indicates information necessary for identifying or distinguishing products, information regarding the price of each product, information regarding origins of products, or information regarding the whole process of manufacturing, distributing, storing, and selling products. The product information may be changed for various reasons, including a change in a product management or marketing policy of a store. For example, price of a specific product may be changed to sell the specific product at a specific time. If the price of a specific product in the store is changed, all the electronic labels displaying information on the specific product are required to change the price at the same time.

The change information receiver 210 receives, from the server 100, product information changing time, electronic label identification numbers, and product information change content. The 'product information changing time' indicates a time for changing a specific product's product information displayed in an electronic label when the product information needs to be changed. The product information changing time may set differently according to types of products.

The product information, especially price, may be frequently changed not just by an external factor, such as price increases or decreases, but by an internal factor, such as a change in a price policy, periodic discount sale, and discount sale at a certain time of day.

Generally, product information changing time is set to change product information of the same product at the same time. For example, in a case of changing price information of milk of the same brand, product information changing time may be set to simultaneously change the price information displayed on all electronic labels that display the product information of the milk of the same brand.

The 'electronic label identification number' is a unique number for each electronic label, and electronic labels displaying product information of the same product may be managed as one group. For example, in a case of changing price information of milk of the same brand, all electronic labels displaying product information of the milk are managed as one group, so that product information to be displayed on the electronic labels that belongs to the group may be changed simultaneously. The 'product information change item' indicates a portion of product information displayed on an electronic label, the portion which is to be changed. The product information change content may include not just price information of a product, but origin information thereof, which is included in the product information.

The change list generator 220 defines a wake-up time for each electronic label identification number, and generates a change list of target electronic labels, the change list which includes identification numbers of the target electronic labels, the wake-up time, and product information change content. According to an exemplary embodiment, a change list may be in a form of table. The 'wake-up time' indicates a time when an electronic label 300 wakes up from a sleep mode so as to receive information from the relay station 200. At the wake-up time, the electronic label 200 wakes up. During a wake-up period (the duration during which the electronic label 300 is awake), the electronic label 300 listens to communications from the relay station 200 to receive a wake-up message, and, if there is data to receive from the server 100, accesses a data channel and receives and stores the data through the relay station 200. According to an exemplary embodiment, electronic labels 300 of a group belonging to the relay station 200 communicate with each other in accordance with a Zigbee communication protocol defined on the PHY/MAC layer according to IEEE802.14.4. One of 16 channels defined in IEEE802.14.4 is used as a wake-up channel. A wake-up message to be broadcasted to the same wake-up channel is provided to all electronic labels of the same group.

A wake-up time may be set differently for each electronic label. That is, a wake-up time may be set to enable electronic labels displaying different product information to wake up at different times. In addition, a wake-up time may be set to enable electronic labels displaying the same product information to wake at up the same time. For example, a wake-up time may be set to enable electronic labels displaying product information of milk of the same brand to wake up at the same time.

The change information transmitter 230 transmits change information, which includes the wake-up time and product information change content, to an electronic label 300 corresponding to an electronic label identification number included in a change list. It may take a long time to transmit product information change content because of a large volume thereof. According to an exemplary embodiment, the product information change content is transmitted to a corresponding electronic label within a time sufficient for the number of electronic labels displaying product information that is to be changed.

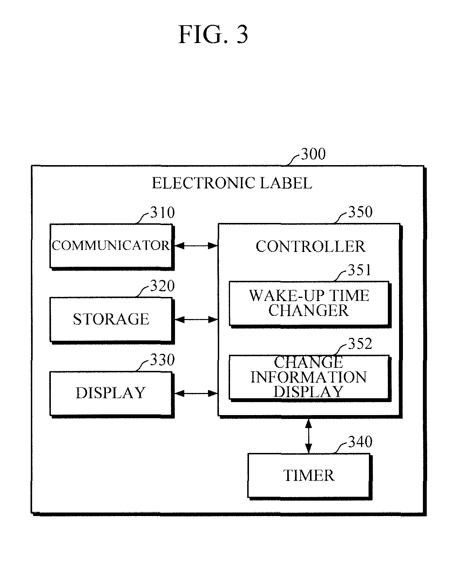

The change command transmitter 240 transmits change command information, which instructs an electronic label 300 corresponding to an identification number included in the change list so as to change product information. The 'change command information' indicates information used to instruct an electronic label 300, which is required to change product information from among a plurality of electronic labels 300 that have received the change information, to change product information. An electronic label that receives change information may be different from an electronic label that receives change command information. In response to receipt of the change command information, the electronic label 300 changes the product information to be displayed. The electronic label 300 displaying change information is described in detail with reference to FIG. 3.

According to an exemplary embodiment, the change command information is transmitted as a message in a similar format as that of a wake-up message through a wake-up channel. The change command information includes a list of electronic labels required to change product information. Each electronic label may listen to a wake-up channel after waking up, in response to receipt of a message, search for an identification number of its own from among a list included in the message, and then, in response to discover of the identification number, display changed product information.

According to an exemplary embodiment, the change list generator 220 may include a synchronous change list generator that generates a change list of target electronic labels, the change list includes an identical wake-up time for each electronic label identification number. For electronic labels displaying information on the same product, wake-up times may be set to wake up the electronic labels at the same time.

According to another exemplary embodiment, the change list generator 220 may include a different-time change list generator that generates a change list of target electronic labels, the change list which includes a different wake-up time for each electronic label identification number. For electronic labels displaying information on different products, a wake-up times may be set to wake up the electronic labels at different times.

According to yet another exemplary embodiment, the change list generator 220 may include a multi-time change list generator that generates a change list of target electrode labels, the change list which includes a plurality of wake-up times for each electronic label identification number. The 'multi-time change list' refers to a change list that is generated by setting a single electronic label to a plurality of wake-up times. In response to receiving change information including a plurality of wake-up times, an electronic label 300 may wake up at a plurality of wake-up times.

FIG. 3 is a block diagram illustrating an electronic label according to an exemplary embodiment.

Referring to FIG. 3, an electronic label 300 includes a communicator 310, a storage 320, a timer 340, and a controller 350. The controller 350 includes a wake-up time changer 351 and a change information display 352.

The electronic label 300 is installed on a shelf in a manner of allowing a potential customer to notice easily, and may display information on a product displayed on the shelf. When a price of a specific product is changed, all the labels displaying information on the specific product should be changed at the same time.

The communicator 310 provides a function of communicating with the relay station 200 wiredly or wirelessly. For example, the communicator 310 may be a WiFi or Zigbee communication module. In the embodiment of FIG. 3, the communicator 310 is a Zigbee communication module.

The storage 320 stores information that is received from the management server 100 through the relay station 200. For example, the storage 320 may be a semiconductor memory.

The display 330 displays information stored in the storage 320. The display 330 may be an Electronic Paper Display (EPD) that is capable of displaying information without power supply. However, aspects of the present disclosure are not limited thereto, and the display 330 may include Liquid Crystal Display (LCD), Plasma Display Panel (PDP), Light Emitting Diode (LED), Cathode-Ray Tube(CRT), and the like.

There are well-known EPDs including: a twist ball-type display of Xerox, which uses a semi-spherical type twist ball with charged electrostatic charges; an electrophoretic display of E-ink, which utilizes electrophoresis and a microcapsule; and a cholesteric liquid crystal display of Kent Display. For example, the EPDs in FIG. 3 may be a product that includes: a thin film transistor (TFT) substrate having a TFT formed on a poly silicon layer deposited on a plastic substrate; a transparent electrode substrate; and a microcapsule layer sealed between the TFT substrate and the transparent electrode substrate, wherein CMOS circuits are formed by recrystallizing edges of a TFT substrate.

The timer 340 causes an event to occur periodically. The timer 340 is activated to operate even when the controller 350 is in a sleep mode, and the timer 340 causes interruption to occur at a predetermined time interval set by the controller 350so as to wake up the controller 350. The wake-up time slot may be determined by the server 100 not to cause a conflict between electronic labels. If the controller 350 of the electronic label 300 wake up by regular events of the timer 340, the electronic label 300 listens to communication from the relay station 200 during a wake-up period, and, if there is data necessary to receive from the server 100, receives the data through the relay station 200 and stores the received data.

The controller 350 includes a wake-up time changer 351 and a change information display 352.

The wake-up time changer 351 sets the timer 340 to a wake-up time included in change information stored in the storage 320.

According to an exemplary embodiment, the timer 340 may include a change timer that causes an event to occur so as to wake up the controller 350 at a wake-up time set by the wake-up time changer 351. The timer 340 periodically causes an event to wake up the controller 350. Alternatively, the timer 340 may causes an event to wake up the controller 350 at a wake-up time included in change information.

If receiving change command information from the relay station 200 during a wake-up period, the change information display 352 displays change information stored in the storage on the display 330. The wakeup time changer 351 sets a wake-up time, and, when an electronic label wakes up at the set wake-up time, the change information display 352 listens to communication from the relay station 200. If receiving change command information from the relay station 200, the electronic label 300 changes product information to be displayed. If not receiving change command information from the relay station 200 although the electronic label 300 receives change information from the relay station 200 and wakes up at a set wake-up time, the electronic label 300 maintains product information displayed on the display 320, rather than changing the same. Therefore, there may be an electronic label 300 which has received change information from the relay station 200, but does not change product information to be displayed. This characteristic may be useful in a case where product information displayed by an electronic label 300 should not be changed although change information is transmitted to the electronic label 300. The change command information received from the relay station 300 is used to identify an electronic label 300 whose product information needs to be changed.

In addition, the configuration of the electronic label 300 shown in FIG. 3 is merely exemplary, and the electronic label 300 may include some of the modules shown in FIG. 3 and/or may further include additional modules necessary for operation. For example, electronic label 300 may further include a short-range communicator. In a case where short-range communication, such as Near Field Communication (NFC), between the electronic label 300 and the relay station 200, the electronic label 300 may display stored change information in response to a change command transmitted by a manager using a remote controller.

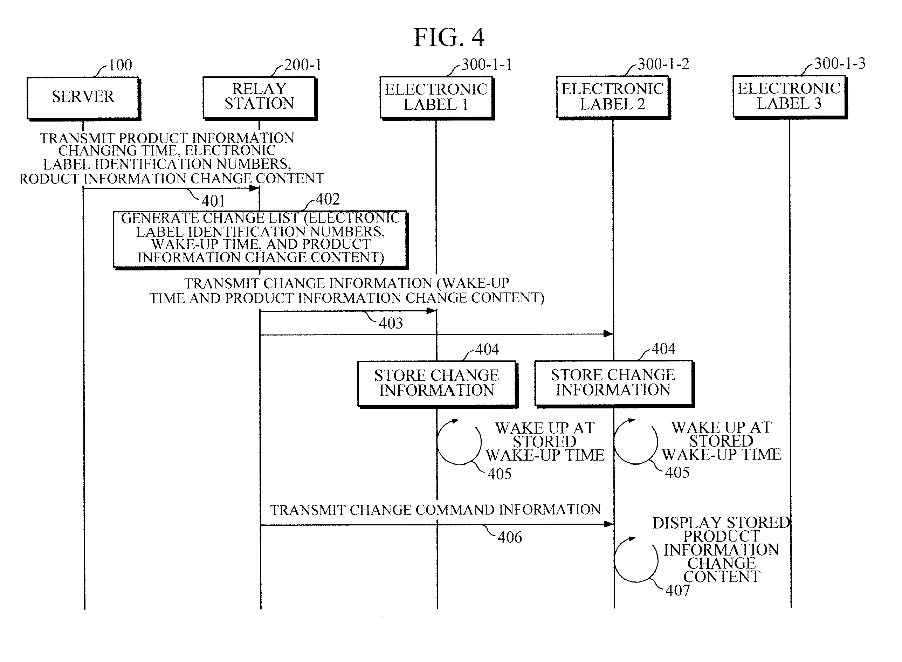

FIG. 4 is a flowchart illustrating an information changing method of an electronic label according to an exemplary embodiment.

Referring to FIG. 4, an information changing method of an electronic label includes the following operations: transmitting, at a server, transmitting product information changing time, electronic label identification numbers, and product information change content to a relay station in 401; and defining, at the relay station, a wake-up time for each electronic label identification number and generating a change list of target electronic labels, the change list which includes identification numbers of the target electronic labels, a wake-up time, and the product information change content in 402; transmitting, at the relay station, change information including the wake-up time and the product information change content to electronic labels corresponding to identification numbers included in the change list in 403; storing, at each of the electronic labels, the change information received from the relay station in 404; waking up, at each of the electronic labels, at the wake-up time included in the change information in 405; transmitting, at the relay station, change command information to the electronic labels corresponding to the identification numbers included in the change list to request a change in product information in 406; and, in response to receipt of the change command information, displaying, at each of the electronic label, the product information according to the product information change content in the stored change information, in 407.

The information changing method of an electronic label may be implemented in various ways. The information changing method in FIG. 4 may be a method that is implemented by the electronic label 300 in the electronic label system in FIG. 1 through communication with the relay station in FIG. 2. To avoid unnecessary repetition, the information changing method of an electronic label is described briefly, and any description not provided herein may be the same as those provided with reference to FIGS. 1 to 3.

In operation 402, a relay station 200-1 generates a change list of target electronic labels, the change list which includes identification numbers of the target electronic labels, a wake-up time, and product information change content.

According to an embodiment, in operation 402, the relay station 200-1 may generate a change list of target electronic labels, the change list which includes an identical wake-up time for each electronic label identification number. The wake-up time may be set to enable electronic labels displaying the same product information to wake up at the same time.

According to another exemplary embodiment, in operation 402, the relay station 200-1 may generate a change list of target electronic labels, the change list which includes a different wake-up time for each electronic label identification number. The wake-up time may be set to enable electronic labels displaying different product information to wake up at different times.

According to yet another exemplary embodiment, in operation 402, the relay station 200-1 may generate a change list of target electronic labels, the change list which includes a plurality of wake-up times for each electronic identification number. The 'multi-time change list' indicates a change list that is generated by setting a plurality of wake-up times for a single electronic label.

In FIG. 4, the relay station 200-1 manages an electronic label 1 300-1-1, an electronic label 2 300-1-2, and an electronic label 3 300-1-3. The electronic label 1 300-1-1 and the electronic label 2 300-1-2 receive change information from the relay station 200-1, but the electronic label 300-1-3 does not receive the same from the relay station 200-1. In this case, the electronic label 1 300-1-1 and the electronic label 2 300-1-2 are target objects, but the electronic label 3 300-1-3 is not a target object. The electronic label 1 300-1-1 and the electronic label 2 300-1-2 stores the received change information in 404.

Then, the electronic label 1 300-1-1 and the electronic label 2 300-1-2 wake up at a wake-up time set according the stored change information in 405. The electronic label 1 300-1-1 and the electronic label 2 300-1-2 may wake up at the same time in a case of displaying information on the same product, and may wake up at different times in a case of displaying information on different products. According to an exemplary embodiment, the electronic label 1 300-1-1, the electronic label 2 300-1-2, and the electronic label 3 300-1-3 may be a group of electronic labels that display product information of the same product. In this case, any change in product information to be displayed may be managed on a group-by-group basis.

Then, after waking up, the electronic label 1 300-1-1 and the electronic label 2 300-1-2 wait to receive change command information from the relay station 200-1. According to an exemplary embodiment, the relay station 200-1 transmits change command information to the electronic label 2 300-1-2 so as to request a change in product information in 406. In response to receipt of the change command information from the relay station 200-1, during a wake-up period, the electronic label 2 300-1-2 changes product information to be displayed according to the stored product information change item in 407. The electronic label 2 300-1-2 may receive the change command information through a wake-up channel. Meanwhile, as having not received change command information from the relay station 200-1 during a wake-up period, the electronic label 1 3001-1 does not change product information to be displayed.

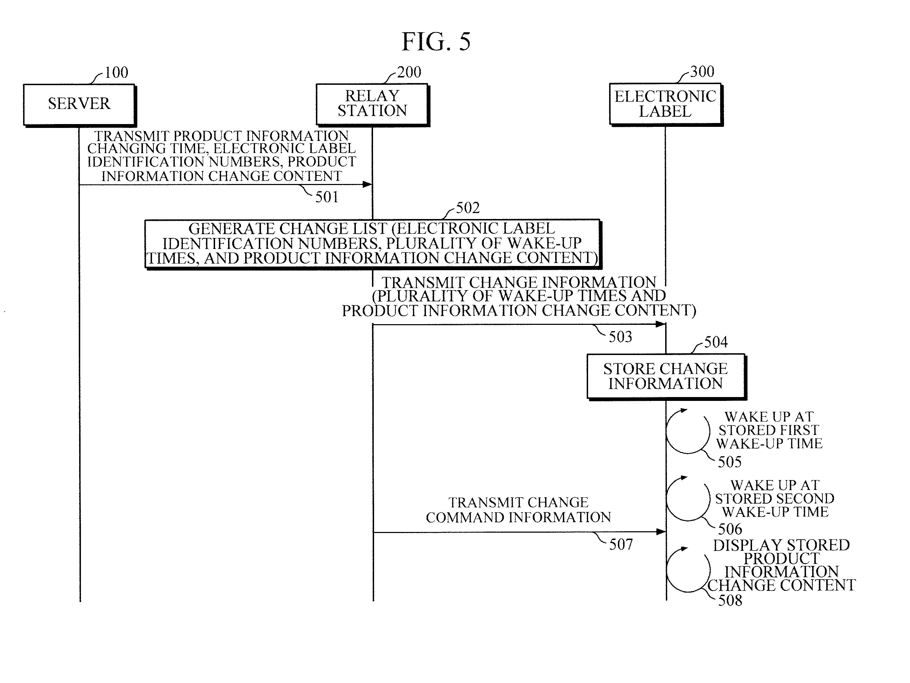

FIG. 5 is a flowchart illustrating an information changing method of an electronic label according to another exemplary embodiment.

FIG. 5 illustrates an information changing method, as does FIG. 4, but is different in terms of a change list generated by a relay station 200. Hereinafter, differences from FIG. 4 is described mainly, and any description not provided herein may be the same that is described with reference to FIG. 4.

Referring to FIG. 5, the relay station 200 receives from the server 100 time for changing product information, electronic label identification number, and product information change content in 501.

In 502, the relay station 200 generates a change list, which is a list of target electronic labels, the list including identification number of the target electronic labels, a plurality of wake-up times, and product information change content.

In 503, the relay station 200 transmits change information, including a plurality of wake-up times and the product information change content, to an electronic label corresponding to an identification number included in the change list.

In 504, the electronic label 300 stores the change information received from the relay station 200. In this case, as the change information includes a plurality of wake-up times, a timer of the electronic label 300 is set to a plurality of wake-up times.

Then, the timer of the electronic label 300 causes an event to wake up a controller of the electronic label 300 at each of a plurality of wake-up times. For example, two wake-up times are received, one wake-up time earlier than the other one may be the first wake-up time, and the late wake-up time may be the second wake-up time. The electronic label 200 wakes up at the first wake-up time in 505 to listen to communication from the relay station 200 and wait to receive change command information from the relay station 200. If receiving change command information from the relay station 200 during the first wake-up period, the electronic label 300 changes product information to be displayed according to product information change content stored in the change command information. Alternatively, if not receiving change command information from the relay station 200 during the first wake-up period, the electronic label 300 enters a sleep mode again.

In a sleep mode, the electronic label 300 wakes up again at the second wake-up time to listen to communication from the relay station 200 and wait to receive change command i9nformation from the relay station 200. If receiving change command information from the relay station 200 during the second wake-up period in 507, the electronic label 300 changes product information to be displayed according to a stored product information change item stored in 508. The electronic label 300 may receive the change command information through a wake-up channel.

According to an exemplary embodiments, it is possible to change information displayed on electronic labels at the same time. According to another exemplary embodiment, it is possible to simultaneously change displayed on electronic labels displaying information on the same product. According to yet another exemplary embodiment, it is possible to change information displayed on electronic labels by selecting the electronic label.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A relay station comprising:
a change information receiver configured to receive, from a server, product information changing time, electronic label identification numbers, and product information change content;
a change list generator configured to define a wake-up time for each electronic label identification number, and generate a change list of target electronic labels, the change list including identification numbers of the target electronic labels, the wake-up time, and the product information change content;
a change information transmitter configured to transmit change information including the wake-up time and the product information change content to electronic labels corresponding to the identification numbers included in the change list; and
a change command transmitter configured to transmit change command information to the electronic labels, which correspond to the identification numbers included in the change list, through a wake-up channel so as to request a change in product information.

2. The relay station of claim 1, wherein the change list generator is further configured to comprise a synchronous change list generator configured to generate a change list of target electronic labels, the change list which includes an identical wake-up time for each electronic label identical number.

3. The relay station of claim 1, wherein the change list generator is further configured to comprise a different-time change list generator configured to generate a change list of target electronic labels, the change list which includes a different wake-up time for each electronic label identification number.

4. The relay station of claim 1, wherein the change list generator is further comprises to comprise a multi-time change list generator configured to generate a change list of target electronic labels, the change list includes a plurality of wake-up times for each electronic label identification number.

5. An electronic label comprising:
a communicator configured to communicate with a relay station;
a storage configured to store information;
a display configured to display information stored in the storage;
a timer configured to cause an event to occur periodically; and
a controller configured to comprise:
a wake-up time changer configured to set the timer to a wake-up time included in change information; and
a change information display configured to, in response to change command information from the relay station during a wake-up period, display, on the display, change information stored in the storage.

6. The electronic label of claim 5, wherein the timer is further configured to comprise a change timer that causes an event to occur so that the controller wakes up at the wake-up time set by the wake-up time changer.

7. A method for changing information in an electronic label, comprising:
transmitting, at a server, product information changing time, electronic label identification numbers, and product information change content; and
defining, at a relay station, a wake-up time for each electronic label identification numbers, and generating a change list of target electronic labels, the change list which includes identification numbers of the target electronic labels, the wake-up time, and the product information change content;
transmitting, at the relay station, change information including the wake-up time and the product information change content to electronic labels corresponding to the identification numbers included in the change list;
storing, at each of the electronic labels, the change information received from the relay station;
waking up, at each of the electronic labels, at the wake-up time included in the change information;
transmitting, at the relay station, change command information to the electronic labels corresponding to the identification numbers included in the change list so as to request a change in product information; and
in response to receipt of the change command information, displaying, each of the electronic labels, product information according to the product information change content stored in the change information.

8. The method of claim 7, wherein the generating of a change list comprises generating a change list of target electronic labels, the change list which includes an identical wake-up time for each electronic label identification number.

9. The method of claim 7, wherein the generating of a change list comprises generating a change list of target electronic labels, the change list which includes a different wake-up time for each electronic label identification number.

10. The method of claim 7, wherein the generating of a change list comprises generating a change list of target electronic labels, the change list which includes a plurality of wake-up times for each electronic label identification number.
